# EUROPÄISCHE PATENTSCHRIFT

(11) **EP 0 329 005 B1**
(45) Veröffentlichungstag und Bekanntmachung des Hinweises auf die Patenterteilung: **03.11.1993**
(21) Anmeldenummer: 89102172.7
(22) Anmeldetag: 08.02.1989
(51) Int. Cl.: H04L 12/56

(54) **Verfahren zum Einrichten von über Koppelvielfache einer mehrstufigen Koppelanordnung verlaufenden virtuellen Verbindungen**
Method for establishing virtual circuits via switches of a multistage switching arrangement
Procédé pour l'établissement de circuits virtuels à travers les commutateurs d'un dispositif de commutation à plusieurs étages

(30) Priorität: 19.02.1988 DE 3805277
(43) Veröffentlichungstag der Anmeldung: 23.08.1989
(73) Patentinhaber: SIEMENS AKTIENGESELLSCHAFT, 80333 München (DE)
(72) Erfinder: Rau, Peter, Dr. Dipl.-Phys., D-8000 München 60 (DE); Foglar, Andreas, Dipl.-Phys., D-8032 Gräfelfing (DE); Schneider, Herbert, Dipl.-Ing., D-8089 Emmering (DE)

(56) Entgegenhaltungen:
- WO-A-84/00265
- US-A- 4 218 756

## Beschreibung

Die Erfindung betrifft ein Verfahren gemäß dem Oberbegriff des Patentanspruches 1.

Ein derartiges Verfahren ist bereits bekannt (US-A-4 491 945). Bei diesem bekannten Verfahren wird ein an einem der Eingänge der Koppelanordnung auftretendes Rufpaket, mit welchem der Aufbau einer virtuellen Verbindung gefordert ist, direkt einem dem betreffenden Eingang zugeordneten Eingang eines Koppelvielfachs zugeführt. Dieses Rufpaket enthält dabei als Paketkopf eine virtuelle Kanalnummer, durch welche die aufzubauende virtuelle Verbindung bezeichnet ist, und im Informationsteil die Zieladresse für die betreffende Verbindung. Anhand dieser Zieladresse legt ein dem betreffenden Koppelvielfach zugehöriger Prozessor den für die aufzubauende Verbindung zu benutzenden Ausgang des Koppelvielfachs und eine für diesen Ausgang gültige virtuelle Kanalnummer fest. Diese virtuelle Kanalnummer wird für die Weiterleitung von dem Rufpaket nachfolgenden Nachrichtenpaketen über den festgelegten Ausgang benutzt.

Die gerade erwähnten Informationen werden unter der Steuerung des Prozessors in einen dem zuvor genannten Eingang des Koppelvielfachs zugeordneten Speicher abgespeichert. Anschließend generiert dieser Prozessor ein dem zuvor empfangenen Rufpaket entsprechendes Rufpaket, dessen Paketkopf die zuvor festgelegte virtuelle Kanalnummer enthält, und überträgt dieses über den zuvor festgelegten Ausgang zu dem nachfolgenden Koppelvielfach. In diesem Koppelvielfach und den diesem wiederum nachfolgenden Koppelvielfachen laufen den gerade erläuterten Vorgängen entsprechende Vorgänge ab, so daß schließlich nacheinander in sämtlichen in die gerade aufzubauende virtuelle Verbindung einzubeziehenden Koppelvielfachen der Koppelanordnung die zuvor genannten Verbindungsinformationen gespeichert werden.

Darüber hinaus ist es bereits bekannt (US-A-4 218 756), in einem Paketvermittlungssystem jeweils einen Paketkopf sowie einen Datenteil aufweisende Pakete zu übertragen. In dem jeweiligen Paketkopf sind dabei für die Weiterleitung dienende Adresseninformationen enthalten. Bei Auftreten eines solchen Paketes wird nach Maßgabe der in dem zugehörigen Paketkopf enthaltenen Adresseninformationen eine Speicherzelle eines Schreib-/Lese-Speichers angesteuert, in welcher den betreffenden Adresseninformationen zugeordnete neue Adresseninformationen gespeichert sind. Diese neuen Adresseninformationen werden anschließend in den Zellenkopf des gerade auftretenden Paketes übernommen, und zwar durch Überschreiben der bisher darin enthaltenen Adresseninformationen.

Außerdem ist vorgesehen, daß bei einem von einem Vermittlungsprozessor her abgegebenen Paket in dem Datenteil ein festgelegtes Steuerwort enthalten ist, durch welches die Durchführung eines Lese- bzw. Schreibvorganges in dem Schreib-/Lese-Speicher gefordert wird. Die dafür in Frage kommende Speicherzelle bezeichnende Adresseninformationen sind dabei in dem Datenteil des gerade auftretenden Paketes enthalten. Nach Maßgabe dieser Adresseninformationen wird die betreffende Speicherzelle angesteuert, um im Falle eines geforderten Schreibvorganges in diese in dem Datenteil des Paketes ebenfalls enthaltene Daten einzutragen bzw. um im Falle eines geforderten Lesevorganges die in der betreffenden Speicherzelle enthaltenen Daten zu übernehmen und in den Datenteil des gerade auftretenden Paketes einzutragen.

Es ist nun Aufgabe der vorliegenden Erfindung, einen Weg zu zeigen, wie bei einem Verfahren der eingangs genannten Art mit einem geringen Steuerungsaufwand die für den Aufbau einer virtuellen Verbindung erforderlichen Verbindungsinformationen ermittelt und in den einzelnen an dieser virtuellen Verbindung beteiligten Koppelvielfachen gespeichert werden können.

Gelöst wird die vorstehend aufgezeigte Aufgabe bei einem Verfahren der eingangs genannten Art durch die im kennzeichnenden Teil des Patentanspruches 1 angegebenen Merkmale.

Die Erfindung bringt den Vorteil mit sich, daß die für den Aufbau von virtuellen Verbindungen erforderlichen Informationen zentral ermittelt und den einzelnen an einer virtuellen Verbindung beteiligten Koppelvielfachen zugeführt werden. Damit reduziert sich der Steuerungsaufwand in den einzelnen Koppelvielfachen. Ein weiterer Vorteil besteht in der Übertragung der Informationen in einem Einstell-Paket über den Weg der aufzubauenden Verbindung. Damit werden gesonderte Steuerwege zwischen der zentralen Steuereinrichtung und den Koppelvielfachen der Koppelanordnung vermieden.

Vorteilhafte Ausgestaltungen der Erfindung ergeben sich aus den Unteransprüchen.

Im folgenden wird nun die vorliegende Erfindung anhand von Zeichnungen beispielsweise näher beschrieben.
FIG 1 zeigt ein Blockschaltbild einer mehrstufigen Koppelanordnung für die Übertragung von Nachrichtenpaketen,
FIG 2 zeigt ausschnittweise einen möglichen Aufbau der in FIG 1 lediglich schematisch dargestellten Koppelvielfache.
FIGUREN 3 bis 5 zeigen Ablaufdiagramme, auf welche im Zuge der Beschreibung eingegangen wird.
FIG 6 zeigt einen möglichen Aufbau der in FIG 2 schematisch dargestellten Paket-Steuereinrichtung PSE.
FIG 7 zeigt einen möglichen Aufbau der in FIG 1 schematisch dargestellten Schnittstellenanordnungen SST1.
FIG 8 zeigt einen möglichen Aufbau der in FIG 2 schematisch dargestellten Koppelfeld-Steuereinrichtung KST.
FIG 9 zeigt einen möglichen Aufbau der in FIG 1 schematisch dargestellten zentralen Steuereinrichtung ZSE.

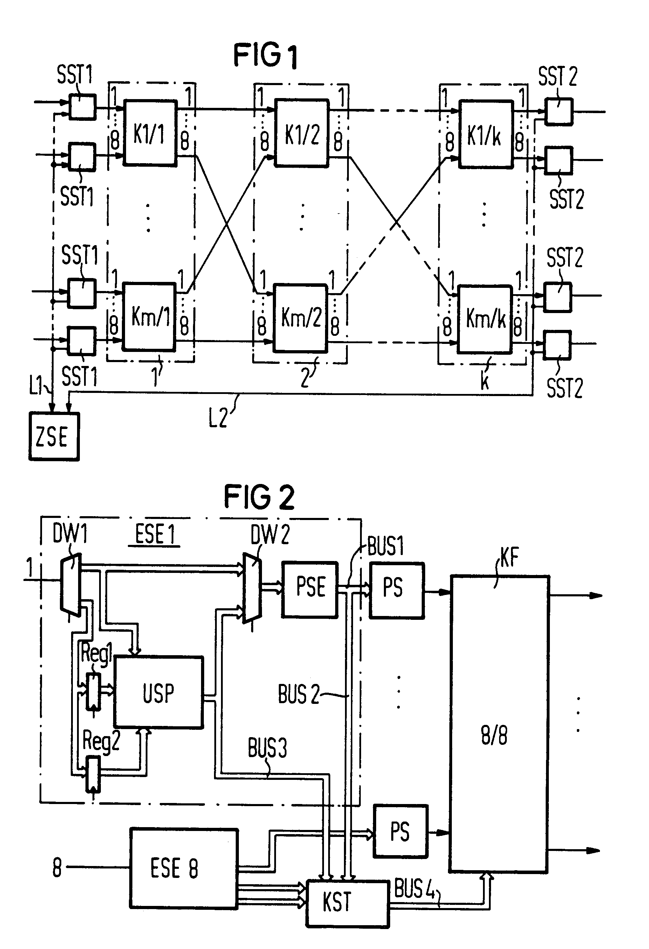

In FIG 1 ist eine k Koppelstufen umfassende Koppelanordnung für die Übertragung von Nachrichtenpaketen über virtuelle Verbindungen dargestellt. Jeder der k Koppelstufen sind jeweils m Koppelvielfache zugeordnet, die beispielsweise jeweils 8 Eingänge und 8 Ausgänge aufweisen. Dabei ist jeder der Eingänge mit jedem der Ausgänge verbindbar. Entsprechend der Zuordnung zu den einzelnen Koppelstufen sind die Koppelvielfache mit k1/1 bis km/1, k1/2 biskm/2,..., k1/k bis km/k bezeichnet. Die mit 1 bis 8 bezeichneten Eingänge der Koppelvielfache k1/1 bis km/1 stellen dabei Eingänge der Koppelanordnung dar, an die über jeweils eine Schnittstellenanordnung SST1 Eingangs-Übertragungsleitungen angeschlossen sind. Dagegen bilden die Ausgänge 1 bis 8 der Koppelvielfache k1/k bis km/k Ausgänge der Koppelanordnung, mit welchen über jeweils eine Schnittstellenanordnung SST2 Ausgangs-Übertragungsleitungen verbunden sind. An die Eingangs- bzw. Ausgangs-Übertragungsleitungen können dabei Nachrichtenpakete abgebende bzw. aufnehmende Teilnehmereinrichtungen angeschlossen sein. Diese Übertragungsleitungen können jedoch auch Verbindungsleitungen darstellen, über welche die in FIG 1 dargestellte Koppelanordnung mit weiteren Koppelanordnungen in Verbindung steht.

Die zuvor erwähnten Schnittstellenanordnungen SST1 sind außerdem gemeinsam an eine Leitungsanordnung L1 einer zentralen Steuereinrichtung ZSE angeschlossen. Über eine zweite Leitungsanordnung L2 stehen dagegen die zuvor erwähnten Schnittstellenanordnungen SST2 mit dieser zentralen Steuereinrichtung in Verbindung.

In FIG 2 ist ausschnittweise ein möglicher Aufbau der in FIG 1 dargestellten Koppelvielfache angegeben. Dabei sind lediglich die Schaltungsteile in die Figur aufgenommen, die für die Erläuterung der vorliegenden Erfindung erforderlich sind. Mit jedem der Eingänge 1 bis 8 des dargestellten Koppelvielfaches ist eine gesonderte Eingangs-Steuereinrichtung verbunden. Entsprechend der Zuordnung zu den Eingängen 1 bis 8 sind diese mit ESE1 bis ESE8 bezeichnet. Jede dieser Eingangs-Steuereinrichtungen weist einen Aufbau auf, wie er am Beispiel der Eingangs-Steuereinrichtung ESE1 angegeben ist. Danach weist eine solche Eingangs-Steuereinrichtung eingangsseitig eine Datenweiche DW1 auf. Diese Datenweiche steht eingangsseitig über ein Leitungssystem mit der zugehörigen in FIG 1 dargestellten Schnittstellenanordnung SST1 in Verbindung. Mit ersten Ausgängen ist diese Datenweiche über ein Leitungssystem an Eingänge zweier Register Reg1 und Reg2 angeschlossen. Die Ausgänge des Registers Reg1 sind Steuereingängen einer Speicheranordnung USP zugeführt. Die Ausgänge des Registers Reg2 stehen dagegen mit Adresseneingängen dieser Speicheranordnung in Verbindung.

Zweite Ausgänge der genannten Datenweichwe DW1 sind einerseits Dateneingängen der Speicheranordnung USP und andererseits ersten Eingängen einer zweiten Datenweiche DW2 zugeführt. Zweite Eingänge dieser Datenweiche sind mit Datenausgängen der Speicheranordnung USP verbunden. Diese Datenausgänge sind außerdem an eine Koppelfeld-Steuereinrichtung KST angeschlossen (BUS3).

Der Datenweiche DW2 ist über ein Leitungssystem eine Paket-Steuereinrichtung PSE nachgeschaltet. Erste Ausgänge (BUS1) dieser Paket-Steuereinrichtung sind mit Eingängen eines Pufferspeichers PS verbunden, während zweite Ausgänge (BUS2) an die bereits genannte Koppelfeld-Steuereinrichtung KST angeschlossen sind. Ausgangsseitig steht der Pufferspeicher PS mit einem Eingang eines Koppelfeldes KF in Verbindung, welches, entsprechend dem angenommenen Beispiel, insgesamt 8 Eingänge und 8 Ausgänge aufweisen möge. Gesteuert wird dieses Koppelfeld von der genannten Koppelfeld-Steuereinrichtung KST, die mit diesem über ein Leitungssystem (BUS4) verbunden ist.

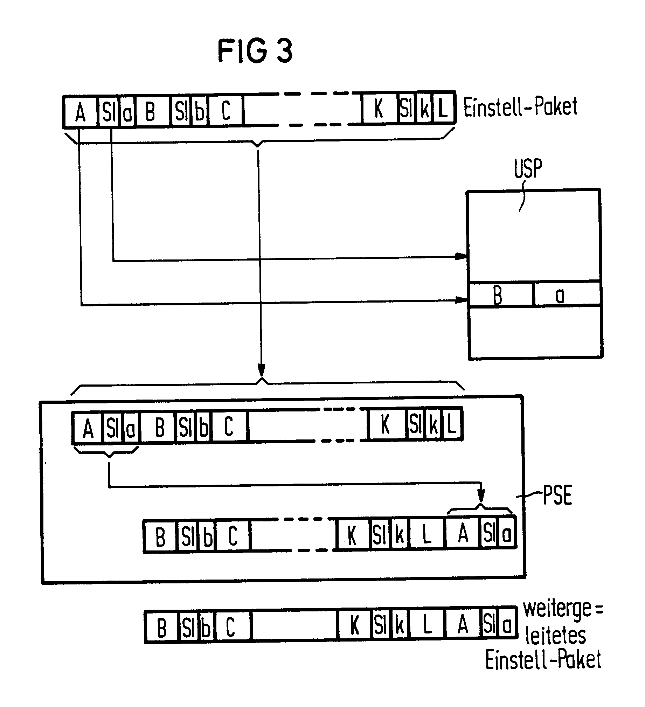

Nachdem zuvor die in den Figuren 1 und 2 dargestellten Schaltungsanordnungen beschrieben worden sind, wird nunmehr das Verfahren zum Einrichten von virtuellen Verbindungen gemäß der vorliegenden Erfindung unter Bezugnahme auf FIG 3 näher beschrieben. Hierzu sei angenommen, daß über die mit der Koppelanordnung verbundenen Übertragungsleitungen Nachrichtenpakete vorgegebener Länge übertragen werden, welche in einem Paketkopf eine eine virtuelle Verbindung bezeichnende virtuelle Kanalnummer und Steuerinformationen führen. Dafür sind jeweils 8 Bit, d. h. 1 Oktett, vorgesehen. An diesen Paketkopf schließt sich der Informationsteil des Nachrichtenpaketes an, in welchem die zu übertragenden Nachrichtensignale enthalten sind. Unter Nachrichtensignale mögen dabei Datensignale, Textinformationssignale und/oder Sprach-bzw. Bildsignale in binär codierter Form verstanden werden.

Es wird nun der Fall betrachtet, daß über eine der Schnittstellenanordnungen SST1 ein Rufpaket, mit welchem ein Aufbau einer virtuellen Verbindung gefordert ist, empfangen wird. Dieses Rufpaket enthält einen Signalisierungs-Paketkopf mit beispielsweise einer für Rufpakete festgelegten virtuellen Kanalnummer. Im Informationsteil ist eine Zieladresse für die aufzubauende Verbindung angegeben. Dieses Rufpaket wird als solches von der Schnittstellenanordnung SST1 erkannt und der zentralen Steuereinrichtung ZSE zugeführt. Anhand der in dem Rufpaket enthaltenen Zieladresse bestimmt die zentrale Steuereinrichtung, bei der es sich beispielsweise um eine Mikroprozessoranordnung handeln möge, die an der aufzubauenden Verbindung beteiligten Koppelvielfache. Darüber hinaus legt sie für diese jeweils den zu benutzenden Ausgang und eine virtuelle Kanalnummer fest, welche bei einer Übertragung über den festgelegten Ausgang in dem Rufpaket nachfolgende Nachrichtenpakete einzutragen ist. Anschließend bildet die zentrale Steuereinrichtung ZSE ein Einstell-Paket, in welchem für sämtliche ermittelten Koppelvielfache die zuvor festgelegten Informationen aufgenommen sind. Die den einzelnen Koppelvielfachen zugeordneten Informationen sind dabei in der Reihenfolge eingetragen, in welcher die Koppelvielfache bei einer Übertragung von Nachrichtenpaketen durchlaufen werden.

Ein erstes Ausführungsbeispiel für die Struktur eines Einstell-Paketes ist im oberen Teil der FIG 3 dargestellt. Danach ist für jedes der ausgewählten Koppelvielfache ein Oktett-Paar vorgesehen. In dem ersten Oktett jedes der Oktett-Paare ist dabei eine von der zentralen Steuereinrichtung her festgelegte virtuelle Kanalnummer eingetragen. In FIG 3 sind diese mit A, B,..., L bezeichnet. Das zweite Oktett jedes der Oktett-Paare stellt ein Steueroktett dar, in welchem neben Steuerinformationen Adresseninformationen eingetragen sind, welche denjenigen Ausgang bezeichnen, der für die betreffende Verbindung in dem jeweiligen Koppelvielfach zu benutzen ist. In FIG 3 sind die Adresseninformationen mit a, b, ..., k und die Steuerinformationen mit SI bezeichnet. Eines der Steuerbits dient dabei zur Kennzeichnung eines Einstell-Paketes. Das erste der in dem Einstell-Paket enthaltenen Oktett-Paare stellt im übrigen den Paketkopf dar.

Das von der zentralen Steuereinrichtung ZSE gebildete Einstell-Paket wird derjenigen Schnittstellenanordnung SST1 zugeführt, von der zuvor das Rufpaket aufgenommen worden ist. Von dieser wird dann dieses Einstell-Paket an die Datenweiche DW1 des zugeordneten Koppelvielfachen weitergeleitet, in welcher zunächst eine oktettweise Serien-Parallel-Umsetzung erfolgt, d. h. daß die einzelnen Oktetts des Einstell-Paketes in paralleler Form auftreten. Außerdem gibt die betreffende Schnittstellenanordnung ein den Beginn des Einstell-Paketes anzeigendes steuersignal an die Datenweiche ab. Durch das Auftreten dieses Steuersignals wird diese derart gesteuert, daß die in dem ersten Oktett-Paar des Einstell-Paketes enthaltene virtuelle Kanalnummer A (FIG 3) in das Register Reg2 und die Steuerinformationen SI in das Register Reg1 (FIG 2) eingetragen werden. Die Steuerinformationen sind dabei von der zentralen Steuereinrichtung ZSE her so festgelegt, daß die Speicheranordnung USP (FIG 2) zu einem Schreibzyklus angesteuert wird. Für diesen Schreibzyklus wird durch die in dem Register Reg2 gespeicherte virtuelle Kanalnummer eine dieser zugeordnete Speicherzelle adressiert. In diese werden anschließend die im ersten Oktett-Paar des Einstell-Paketes auftretenden Adresseninformationen a und die virtuelle Kanalnummer B des nachfolgenden Oktett-Paares eingetragen (USP in FIG 3).

Von der Datenweiche DW1 her wird darüber hinaus das gerade empfangene Einstell-Paket über die Datenweiche DW2 der Paket-Steuereinrichtng PSE zugeführt. In dieser Paket-Steuereinrichtung werden die in dem ersten Oktett-Paar enthaltenen Adresseninformationen a ausgelesen und zu der Koppelfeld-Steuereinrichtung KST hin übertragen. Anhand dieser Adresseninformationen nimmt die Koppelfeld-Steuereinrichtung im folgenden eine Einstellung des Koppelfeldes KF vor. Auf diese Einstellung wird hier jedoch nicht näher eingegangen, da diese nicht Gegenstand der vorliegenden Erfindung ist.

In der genannten Paket-Steuereinrichtung PSE wird außerdem das dieser gerade zugeführte Einstell-Paket derart modifiziert, daß das bisher erste Oktett-Paar abgetrennt wird, so daß das bisher zweite Oktett-Paar, welches die virtuelle Kanalnummer B enthält, nunmehr den Paketkopf bildet. Das abgetrennte Oktett-Paar kann dabei beispielsweise an das Ende des modifizierten Einstell-Paketes angefügt werden, so daß dieses die ursprüngliche Länge beibehält (PSE in FIG 3). Es ist jedoch auch möglich, das abgetrennte Oktett-Paar wegzulassen, so daß ein verkürztes Einstell-Paket entsteht.

Das modifizierte Einstell-Paket wird anschließend dem Pufferspeicher PS zugeführt, in welchem es zunächst bis zu einer Weiterleitung über das Koppelfeld KF zwischengespeichert bleibt. Steht dann eine Weiterleitung an, so wird von der Koppelfeld-Steuereinrichtung KST her das Koppelfeld KF entsprechend der zuvor aufgenommenen Adresseninformationen a eingestellt. Nach dieser Einstellung des Koppelfeldes erfolgt die Weiterleitung des zwischengespeicherten Einstell-Paketes zu dem nachfolgenden Koppelvielfach.

In diesem Koppelvielfach und den diesem wiederum nachfolgenden Koppelvielfachen laufen den zuvor erläuterten Verfahrensschritten entsprechende Verfahrensschritte ab, so daß das Einstell-Paket schließlich sämtliche an der aufzubauenden Verbindung beteiligten Koppelvielfache durchläuft. Nach einem derartigen Durchlauf sind dann in den betreffenden Koppelvielfachen die für eine nachfolgende Übertragung von Nachrichtenpaketen erforderlichen Informationen gespeichert.

Auf die Übertragung von Nachrichtenpaketen nach einem erfolgten Aufbau einer virtuellen Verbindung wird hier nicht näher eingegangen. Es sei hier nur darauf hingewiesen, daß bei einer Übertragung eines Nachrichtenpaketes über die einzelnen Koppelvielfache anhand der in diesem Nachrichtenpaket enthaltenen virtuellen Kanalnummer in dem jeweiligen Koppelvielfach die Speicheranordnung USP (FIG 2) für einen Lesezyklus angesteuert wird. Dabei wird aus der durch diese virtuelle Kanalnummer bezeichneten Speicherzelle die darin gespeicherte virtuelle Kanalnummer ausgelesen. Durch diese virtuelle Kanalnummer wird über die Datenweiche DW2 die bis dahin in dem Nachrichtenpaket enthaltene virtuelle Kanalnummer überschrieben. Nach diesem Überschreiben wird dann das Nachrichtenpaket dem Pufferspeicher PS zugeführt. Außerdem wird bei dem gerade erwähnten Lesezyklus die in der betreffenden Speicherzelle gespeicherten Adresseninformationen ausgelesen und der Koppelfeld-Steuereinrichtung KST für eine Einstellung des Koppelfeldes KF zugeführt.

Im folgenden werden nun noch weitere Ausführungsbeispiele für die Übertragung von Einstell-Paketen angegeben.

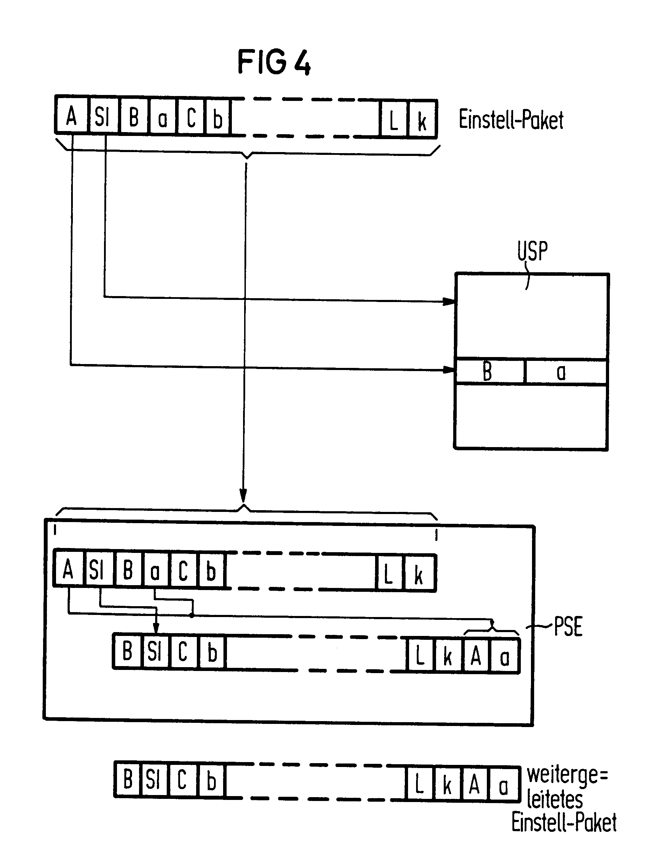

Bei einem zweiten Ausführungsbeispiel (FIG 4) für die Übertragung eines Einstell-Paketes wird von der zentralen Steuereinrichtung ZSE her ein Einstell-Paket abgegeben, in welchem im Paketkopf (erstes Oktett-Paar) eine für die Ansteuerung des ersten Koppelvielfachen zu benutzende virtuelle Kanalnummer und für die Kennzeichnung eines Einstell-Paketes dienende Steuerinformationen enthalten sind. In den nachfolgenden Oktett-Paaren (Informationsteil des Einstell-Paketes) sind für die einzelnen Koppelvielfache jeweils den zu benutzenden Ausgang bezeichnende Adresseninformationen und die für diesen Ausgang gültige virtuelle Kanalnummer eingetragen.

Beim Durchlauf dieses Einstell-Paketes durch die Koppelvielfache wird mit der im Paketkopf eingetragenen virtuellen Kanalnummer die jeweilige Speicheranordnung USP (FIG 2) angesteuert und die in dem dem Paketkopf nachfolgenden Oktett-Paar enthaltenen Informationen abgespeichert. Für die Weiterleitung dieses Einstell-Paketes zum nächsten Koppelvielfach wird der Paketkopf des empfangenen Einstell-Paketes in der Paket-Steuereinrichtung PSE entfernt. Dabei werden die in diesem enthaltenen Steuerinformationen in das bisher dem Paketkopf folgende Oktett-Paar unter Überschreiben der darin enthaltenen Adresseninformationen eingetragen. Diese Adresseninformationen sind zuvor abgespeichert worden und werden in dem nachfolgenden Koppelvielfach nicht benötigt.

Das gerade erläuterte zweite Ausführungsbeispiel ist insbesondere für Koppelanordnungen mit einer Vielzahl von Koppelstufen geeignet, da in dem gerade erläuterten Einstell-Paket gegenüber dem ersten Ausführungsbeispiel bei gleicher Paketlänge Informationen für eine größere Anzahl von Koppelvielfachen übertragbar sind.

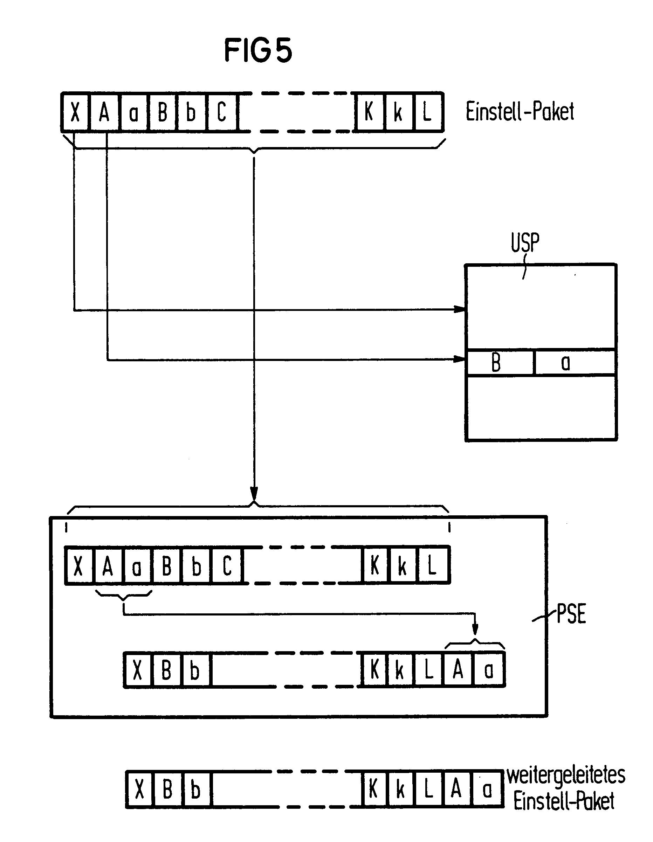

Bei einem dritten Ausführungsbeispiel (FIG 5) wird von der zentralen Steuereinrichtung ZSE ein Einstell-Paket übertragen, in dessen Paketkopf zur Kennzeichnung des Einstell-Paketes eine fest vorgegebene virtuelle Kanalnummer X enthalten ist. Im Informationsteil dieses Einstell-Paketes sind in aufeinanderfolgenden Oktett-Paaren für die Koppelvielfache jeweils eine eingangsseitig zu benutzende virtuelle Kanalnummer und den zu benutzenden Ausgang bezeichnende Adresseninformationen enthalten. Beim Durchlauf dieses Einstell-Paketes durch die Koppelvielfache wird mit der im ersten Oktett-Paar des Informationsteiles eingetragenen virtuellen Kanalnummer die jeweilige Speicheranordnung USP angesteuert und die in diesem Oktett-Paar enthaltenen Adresseninformationen sowie die im nachfolgenden Oktett-Paar enthaltene virtuelle Kanalnummer abgespeichert. Für die Weiterleitung des Einstell-Paketes an das nachfolgende Koppelvielfach wird das dem Paketkopf nachfolgende Oktett-Paar entfernt und ggf. an das Ende des Einstell-Paketes angefügt.

Das dritte Ausführungsbeispiel ist immer dann anwendbar, wenn für die über die Koppelanordnung gemäß FIG 1 zu übertragenden Pakete von der festgelegten Struktur her keine Steuerbits zur Verfügung stehen, die zur Kennzeichnung eines Einstell-Paketes benutzt werden können.

Bei einem vierten Ausführungsbeispiel ist schließlich vorgesehen, daß in einem Einstell-Paket, wie es im oberen Teil der FIG 3 angegeben ist, in den Steuerinformationen zusätzlich Informationen enthalten sind, durch welche angezeigt wird, ob in dem jeweiligen Koppelvielfach beim Durchlauf eines Einstell-Paketes ein Schreibzyklus in der zugehörigen Speicheranordnung durchgeführt werden soll oder nicht bzw. ob im Zuge eines Schreibzyklus in die angesteuerte Speicherzelle zusätzlich eine virtuelle Kanalnummer und Adresseninformationen eingeschrieben werden sollen. Durch diese Maßnahme ist es möglich, über die in FIG 1 dargestellte Koppelanordnung virtuelle Multipunktverbindungen einzurichten.

Im übrigen sei noch darauf hingewiesen, daß in den zuvor beschriebenen Einstell-Paketen zusätzlich eine Markierungsinformation übertragen wird. Durch diese Markierungsinformation wird nach einem vollständigen Durchlauf eines Einstell-Paketes durch die in FIG 1 dargestellte Koppelanordnung die mit dem letzten durchlaufenen Koppelvielfach verbundene Schnittstellenanordnung SST2 derart gesteuert, daß eine Weiterleitung des betreffenden Einstell-Paketes an die mit dieser Schnittstellenschaltung verbundene Übertragungsleitung verhindert wird. Das betreffende Einstell-Paket wird vielmehr über das in FIG 1 dargestellte Leitungssystem L2 zu der zentralen Steuereinrichtung ZSE zurückübertragen, um dieser den vollständigen Durchlauf des Einstell-Paketes durch die Koppelanordndung anzuzeigen.

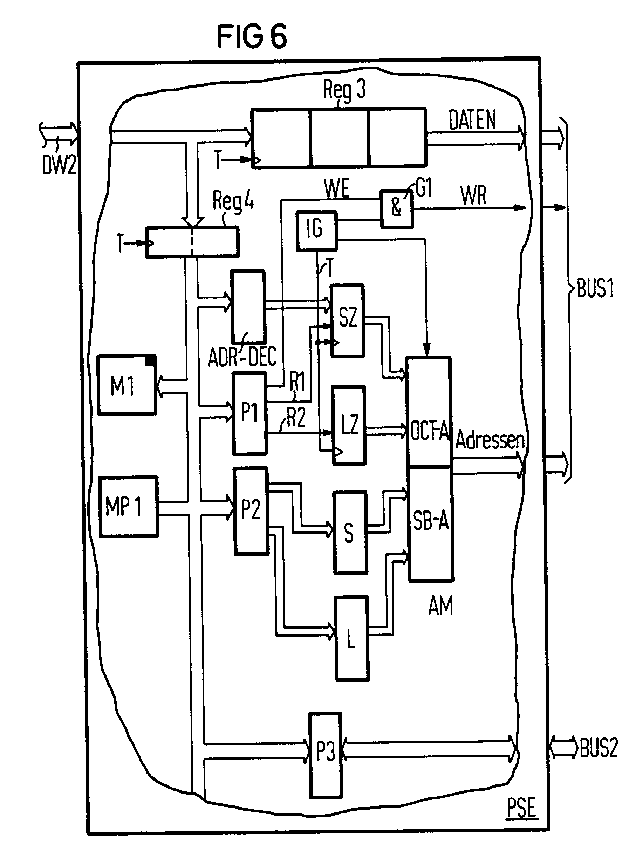

In FIG 6 ist ein möglicher Aufbau einer in den Eingangs-Steuereinrichtungen ESE1 bis ESE8 (FIG 2) jeweils vorhandenen Paket-Steuereinrichtung PSE ausschnittweise dargestellt. Dabei wird als Beispiel davon ausgegangen, daß von der zentralen Steuereinrichtung ZSE Einstell-Pakete in der Form übertragen werden, wie sie in FIG 3 angegeben ist.

Gemäß FIG 6 ist eine Paket-Steuereinrichtung aus einem Mikroprozessor-System gebildet. Dieses dient einerseits für den Austausch von Steuerinformationen mit der in FIG 2 dargestellten Koppelfeld-Steuereinrichtung KST und andererseits für die Steuerung des in FIG 2 dargestellten Pufferspeichers PS, der aus einem Schreib-Lesespeicher gebildet sein möge, in welchem Pakete wahlfrei in freien Speicherbereichen speicherbar und aus welchem Pakete in der Reihenfolge ihres Eintreffens auslesbar sind. Dieses Mikroprozessor-System weist einen Mikroprozessor MP1 auf, an dessen Busleitungssystem eine als Arbeits- und Programmspeicher dienende Speicheranordnung M1, ein Register Reg4, Schnittstelleneinrichtungen P1 bis P3 sowie ein Adressen-Decodierer ADR-DEC angeschlossen sind. Das Register Reg4 steht eingangsseitig mit dem Ausgang der in FIG 2 dargestellten Datenweiche DW2 in Verbindung. Es dient dabei für die Zwischenspeicherung des bei einem Einstell-Paket oder Nachrichtenpaket im ersten Oktettpaar (Paketkopf) übertragenen Steueroktetts, welches, wie bereits oben erwähnt, Steuerinformationen und Adresseninformationen enthält (in FIG 3 mit SI bzw. a bis k bezeichnet). An die Datenweiche DW2 ist darüber hinaus ein mehrstufiges Register Reg3 angeschlossen. Durch dieses werden eintreffende Einstell-Pakete bzw. Nachrichtenpakete vor einer Weiterleitung an den Pufferspeicher PS so lange verzögert, bis das genannte Steueroktett in das Register Reg4 aufgenommen ist. Die beiden Register werden dazu von einem Impulsgenerator IG her mit Taktimpulsen T beaufschlagt, deren Abstände dem zeitlichen Abstand zweier aufeinanderfolgender Oktetts entsprechen.

In das Register Reg4 aufgenommene Adresseninformationen werden unter der Steuerung des Mikroprozessors MP1 über die Schnittstelleneinrichtung P3 und das damit verbundene Leitungssystem BUS2 der in FIG2 dargestellten Koppelfeld-Steuereinrichtung KSE zugeführt. Darüber hinaus nimmt der Mikroprozessor auf das Auftreten eines Steueroktetts hin eine Einstellung eines Adressengenerators vor, welcher dem Pufferspeicher PS Adressensignale und Schreibimpulse für Schreib- und Lesevorgänge über das Leitungssystem BUS1 zuführt. Den Eingang dieses Adressengenerators bilden die Schnittstelleneinrichtungen P1 und P2 sowie der Adressendecodierer ADR-DEC.

Der Adressengenerator weist zu dem Pufferspeicher PS hin einen Adressenmultiplexer AM auf. Dieser ist in zwei Bereiche SB-A und OCT-A unterteilt. An den Bereich SB-A sind ein Register S für die Speicherung einer bei Schreibvorgängen zu benutzenden Speicherbereichsadresse sowie ein Register L für die Speicherung einer bei Lesevorgängen zu benutzenden Speicherbereichsadresse angeschlossen. Diese Register stehen eingangsseitig mit der genannten Schnittstelleneinrichtung P2 in Verbindung. An den Bereich OCT-A sind dagegen ein Oktettzähler SZ für Schreibvorgänge und ein Oktettzähler LZ für Lesevorgänge angeschlossen. Diese Oktettzähler weisen jeweils eine der Anzahl der in einem Paket enthaltenen Oktetts entsprechende Zählperiode auf und werden dafür von dem bereits genannten Impulsgenerator IG her durch Abgabe von Taktimpulsen T angesteuert. Darüber hinaus führt der Impulsgenerator dem Adressenmultiplexer AM im Zuge eines Steuerzyklus Einstellsignale (Einstellimpulse) zu.

Die beiden Oktettzähler SZ und LZ sind über jeweils eine Rücksetzleitung R1 bzw. R2 mit der Schnittstelleinrichtung P1 verbunden. Ein Ladeeingang des Oktettzählers SZ ist außerdem an den Adressendecodierer ADR-DEC angeschlossen.

Von der Schnittstelleneinrichtung P1 her werden außerdem über eine Steuerleitung WE Freigabesignale für Schreibvorgänge einem UND-Glied G1 zugeführt. Mit Hilfe dieses UND-Gliedes wird bei Auftreten eines Freigabesignals ein von dem Impulsgenerator IG bereitgestellter Schreibimpuls über eine Leitung WR übertragen. Diese Leitung ist Bestandteil des zu dem Pufferspeicher PS hinführenden Leitungssystems BUS1.

Die Einstellung des zuvor beschriebenen Adressengenerators erfolgt nun in der Weise, daß der Mikroprozessor MP1 bei Auftreten eines oben erwähnten Steueroktetts in dem Register Reg4 zunächst anhand einer in der Speicheranordnung M1 geführten Belegungsliste für den Pufferspeicher PS einen freien Speicherbereich ermittelt, in welchen das gerade auftretende Einstell-Paket oder Nachrichtenpaket abgespeichert werden kann. Die Anfangsadresse dieses Speicherbereiches wird über die Schnittstelleneinrichtung P2 in das Register S übertragen. Außerdem wird der Oktettzähler SZ nach Maßgabe der in dem Steueroktett enthaltenen Steuerinformationen auf einen im folgenden erläuterten Anfangszählerstand voreingestellt. Nach dieser Einstellung gibt dann der Mikroprozessor MP1 im Zuge eines Steuerzyklus eine der Anzahl der in einem Paket enthaltenen Oktetts entsprechende Anzahl von zuvor erwähnten Freigabesignalen über die Leitung WE ab. Durch diese Freigabesignale wird dieser Steuerzyklus in eine entsprechende Anzahl von Unterzyklen unterteilt, in welchen dem Pufferspeicher PS jeweils ein Schreibimpuls zugeführt wird. Zusammen mit diesen Schreibimpulsen erhält dieser Pufferspeicher über den Adressenmultiplexer AM durch das Register S und den Zählerstand des Oktettzählers SZ festgelegte Adressensignale zugeführt. Dieser Zählerstand wird dabei in jedem Unterzyklus inkrementiert. Auf diese Weise werden die das Register Reg3 durchlaufenden Oktetts eines Einstell-Paketes bzw. Nachrichtenpaketes nacheinander in dem Pufferspeicher PS gespeichert.

Der zuvor erläuterte Steuerzyklus ist im übrigen so festgelegt, daß in jedem Unterzyklus zusätzlich ein Oktett eines in dem Pufferspeicher PS gespeicherten, als nächstes für eine Übertragung anstehenden Paketes ausgelesen werden kann. Für dieses Auslesen ist in dem Register L von dem Mikroprozessor MP1 her eine entsprechende Speicherbereichsadresse geladen. Dieses Laden erfolgt im übrigen auf ein von der Koppelfeld-Steuereinrichtung KST über das Leitungssystem BUS2 übertragenes Steuersignal hin. Außerdem setzt der Mikroprozessor den Oktettzähler LZ zu Beginn eines Steuerzyklus zurück, wodurch dieser seinen Anfangszählerstand "0" annimmt. Ausgehend von diesem Anfangszählerstand wird dann in jedem Unterzyklus der aktuelle Zählerstand inkrementiert. Der Wechsel zwischen einem Schreibvorgang und einem Lesevorgang innerhalb eines Unterzyklus erfolgt dabei mit Hilfe eines dem bereits genannten Adressenmultiplexer AM zugeführten Einstellsignals.

Wie bereits erwähnt, erfolgt die Voreinstellung des Oktettzählers SZ nach Maßgabe des gerade in dem Register Reg4 gespeicherten Steueroktetts. Geht aus diesem das Vorliegen eines Einstell-Paketes hervor, so wird der Oktettzähler durch den Adressendecodierer ADR-DEC so voreingestellt, daß die ersten beiden Oktetts dieses Einstell-Paketes im Zuge eines Steuerzyklus in den beiden letzten Speicherzellen des ausgewählten Speicherbereiches gespeichert werden. Die nachfolgenden Oktetts werden dann in der Reihenfolge ihres Eintreffens in die übrigen Speicherzellen dieses Speicherbereiches gespeichert, und zwar beginnend mit der ersten Speicherzelle. Dies bedeutet, daß beispielsweise bei einem 32 Oktetts umfassenden Einstell-Paket im Zuge eines Steuerzyklus Adressensignale in der Reihenfolge 30, 31, 0, ..., 29 dem Pufferspeicher PS zugeführt werden. Da, wie bereits erwähnt, für das Auslesen eines Paketes aus dem Pufferspeicher PS Adressensignale immer in der Reihenfolge 0, 1,... bereitgestellt werden, wird somit unter der Steuerung der Paket-Steuereinrichtung PSE ein Einstell-Paket so umgeordnet, daß bei dessen Weiterleitung gemäß FIG 3 das bisher erste Oktett-Paar an das Ende des betreffenden Einstell-Paketes verlagert ist.

Geht dagegen aus einem in dem Register Reg4 gespeicherten Steueroktett das Vorliegen eines Nachrichtenpaketes hervor, so wird der Oktettzähler SZ über die Leitung R1 auf seinen Anfangszählerstand "0" zurückgesetzt, so daß dem Pufferspeicher PS im Zuge eines Steuerzyklus Adressensignale in der Reihenfolge 0, 1, ... zugeführt werden. Damit erfolgt die Speicherung der einzelnen Oktetts eines Nachrichtenpaketes in der gleichen Reihenfolge wie das spätere Auslesen, so daß bei der Weiterleitung die Reihenfolge der einzelnen Oktetts erhalten bleibt.

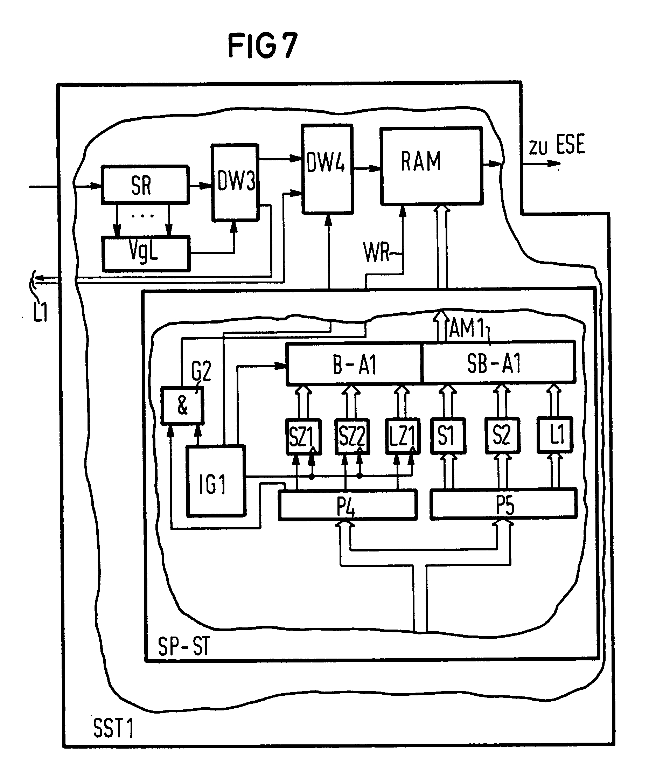

In FIG 7 ist ausschnittweise ein möglicher Aufbau der in FIG 1 dargestellten Schnittstellenanordnungen SST1 angegeben. Danach durchlaufen eintreffende Pakete zunächst ein Schieberegister SR, welches ausgangsseitig mit einer Datenweiche DW3 verbunden ist. An parallele Ausgänge dieses Schieberegisters ist eine Vergleicheranordndung Vgl angeschlossen, welche das Eintreffen eines Rufpaketes anhand der in diesem enthaltenen festgelegten virtuellen Kanalnummer überwacht. Bei Vorliegen eines solchen Rufpaketes steuert die Vergleicheranordnung die Datenweiche DW3 so, daß das betreffende Rufpaket über die Leitungsanordnung L1 der in FIG 1 dargestellten zentralen Steuereinrichtung ZSE zugeführt wird. Pakete anderer Art gelangen dagegen über diese Datenweiche zu einem ersten Eingang einer weiteren Datenweiche DW4. Ein weiterer Eingang steht mit der Leitungsanordnung L1 in Verbindung, um von der zentralen Steuereinrichtung ZSE her übertragene Einstell-Pakete weiterzuleiten. Der Ausgang dieser Datenweiche DW4 ist mit einem Dateneingang eines Schreib-Lesespeichers RAM verbunden. In diesem ist eine Mehrzahl von Einstell-Paketen und Nachrichtenpaketen wahlfrei in freien Speicherbereichen speicherbar. Das Auslesen gespeicherter Pakete und damit deren Weiterleiten an die zugehörige Eingangs-Steuereinrichtung (ESE1 bis ESE8) erfolgt in der Reihenfolge des Speicherns dieser Pakete (FIFO-Prinzip).

Mit dem Schreib-Lesespeicher RAM ist eine Speicher-Steuereinrichtung SP-ST verbunden. Diese weist einen beispielsweise von einem nicht dargestellten Mikroprozessor her gesteuerten Adressengenerator auf. Von diesem ist ein Adressenmultiplexer AM1 dargestellt, der in zwei Bereiche SB-A1 und B-A1 unterteilt ist. An den Bereich SB-A1 sind ein Register L1 für die Speicherung einer bei Lesevorgängen zu benutzenden Speicherbereichsadresse sowie zwei Register S1 und S2 für die Speicherung jeweils einer bei Schreibvorgängen zu benutzenden Speicherbereichsadresse angeschlossen. Diese Register stehen eingangsseitig mit einer Schnittstelleneinrichtung P5 in Verbindung. An den Bereich B-A1 sind dagegen ein Bitzähler LZ1 für Lesevorgänge sowie zwei Bitzähler SZ1 und SZ2 für Schreibvorgänge angeschlossen. Diese Bitzähler weisen jeweils eine der Anzahl der in einem Paket enthaltenenen Bits entsprechende Zählperiode auf. Sie erhalten dafür von einem Impulsgenerator IG1 her entsprechende Taktimpulse zugeführt. Darüber hinaus gibt dieser Impulsgenerator einerseits Einstellsignale für den Adressenmultiplexer AM1 sowie für die Datenweiche DW4 und andererseits Schreibimpulse ab. Die Freigabe dieser Schreibimpulse erfolgt mit Hilfe eines UND-Gliedes G2, welches über eine Schnittstelleneinrichtung P4 Freigabesignale zugeführt erhält. An diese sind außerdem Rücksetzeingänge der Bitzähler LZ1, SZ1 und SZ2 angeschlossen.

Der der Speicher-Steuereinrichtung SP-ST zugehörige Mikroprozessor nimmt für das Speichern eines Nachrichtenpaketes oder Einstell-Paketes in dem Schreib-Lesespeicher RAM anhand einer aktuellen Belegungsliste eine Voreinstellung des gerade beschriebenen Adressengenerators vor. Dazu wird in das Register S1 über die Schnittstelleneinrichtung P5 eine Anfangsadresse eines freien Speicherbereiches eingetragen, in welches das nächste eintreffende Nachrichtenpaket abgespeichert werden kann. Für ein gegebenenfalls zusammen mit einem Nachrichtenpaket zu speichernden Einstell-Paket wird zusätzlich in das Register S2 eine Anfangsadresse eines weiteren Speicherbereiches geladen. Darüber hinaus wird bei Eintreffen eines Nachrichtenpaketes bzw. Einstell-Paketes der dem Register S1 zugehörige freilaufende Bitzähler SZ1 bzw. der dem Register SZ2 zugehörige freilaufende Bitzähler SZ2 auf seinen Anfangszählerstand zurückgesetzt. Ein solches Eintreffen wird der Speicher-Steuereinrichtung SP-ST beispielsweise von der Vergleicheranordnung Vgl bzw. von der zentralen Steuereinrichtung ZSE durch ein entsprechendes Steuersignal angezeigt. In einem sich anschließenden Steuerzyklus, der in eine der Anzahl der in einem Paket enthaltenen Bits entsprechende Anzahl von Unterzyklen unterteilt ist, werden dann dem Schreib-Lesespeicher RAM in jedem Unterzyklus zwei von dem Impulsgenerator IG1 her bereitgestellte und durch über die Schnittstelleneinrichtung P4 übertragene Freigabesignale freigegebene Schreibimpulse zugeführt. Außerdem erfolgt unter der Steuerung des Impulsgenerators IG1 in jedem Unterzyklus eine Umschaltung der Datenweiche DW4 und eine Inkrementierung der Bitzähler SZ1 und SZ2, so daß in aufeinanderfolgenden Unterzyklen nacheinander die Bits eines Nachrichtenpaketes und die Bits eines Einstell-Paketes gemeinsam in den Schreib-Lesespeicher RAM eingeschrieben werden können.

Darüber hinaus sind die Unterzyklen eines Steuerzyklus so festgelegt, daß zusätzlich jeweils ein Bit eines in dem Schreib-Lesespeicher RAM gespeicherten Paketes ausgelesen werden kann. Für das Auslesen eines solchen Paketes wird zu Beginn eines Steuerzyklus nach Maßgabe einer Belegungsliste eine entsprechende Anfangsadresse eines durch ein Paket belegten Speicherbereiches in das Register L geladen und der zugeordnete Bitzähler LZ auf seinen Anfagszählerstand rückgesetzt. Ausgehend von diesem Anfangszählerstand erfolgt dann in aufeinanderfolgenden Unterzyklen fortlaufend eine Inkrementierung des aktuellen Zählerstandes.

Dem Schreib-Lesespeicher RAM ist bei dem hier beschriebenen Ausführungsbeispiel im übrigen eine dem Schieberegister SR und der Vergleicheranordnung Vgl entsprechende, nicht dargestellte Einrichtung nachgeschaltet, um der in FIG 2 dargestellten Datenweiche DW1 den Beginn eines ausgelesenen Einstell-Paketes anzuzeigen.

Vorstehend wurde lediglich als Beispiel das Speichern eines Einstell-Paketes gemäß dem ersten Ausführungsbeispiel unter Modifizierung der Reihenfolge der diesem zugehörigen Okttets beschrieben. Die in FIG 6 dargestellte Paket-Steuereinrichtung PSE kann jedoch auch in einfacher Weise durch eine entsprechende Voreinstellung des zugehörigen Adressengenerators an Einstell-Pakete der übrigen Ausführungsbeispiele angepaßt werden.

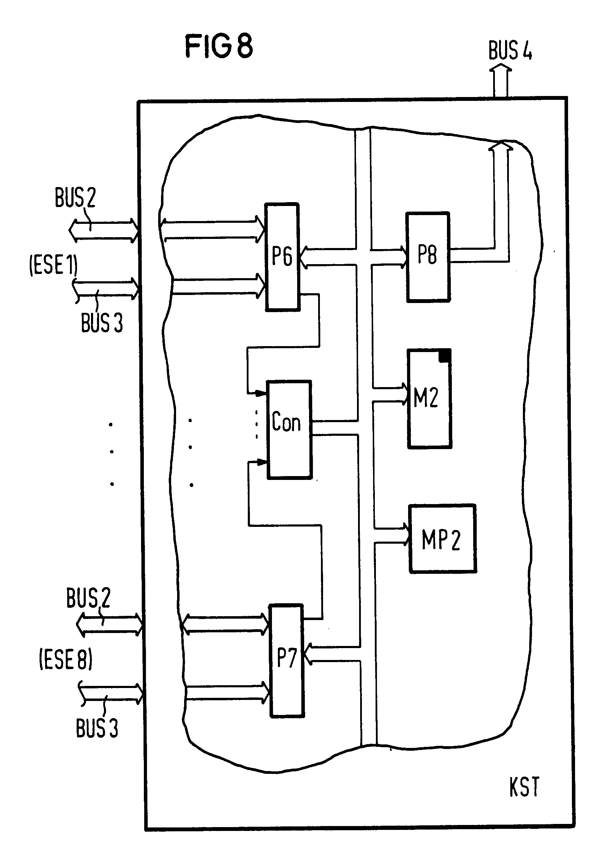

In FIG 8 ist ein möglicher Aufbau der in FIG 2 gezeigten Koppelfeld-Steuereinrichtung KST ausschnittweise dargestellt. Danach weist diese einen Mikroprozessor MP2 auf, an dessen Bussystem eine als Arbeits- und Programmspeicher dienende Speicheranordnung MP2, Schnittstelleneinrichtungen P6, P7 und P8 sowie eine Unterbrechungs-Steueranordnung Con (interrupt-controller) angeschlossen sind. Die Schnittstelleneinrichtungen P6 und P7 sind stellvertretend für insgesamt acht derartige Schnittstelleneinrichtungen angegeben, welche mit den Leitungssystemen BUS2 und BUS3 jeweils einer der in FIG 2 dargestellten Eingangs-Steuereinrichtungen ESE1 bis ES8 verbunden sind. Jede dieser Schnittstelleneinrichtungen steht über eine Steuerleitung mit der genannten Unterbrechungs-Steueranordnung Con in Verbindung. Über eine solche Steuerleitung wird dem Mikroprozessor MP2 immer dann ein Unterbrechungssignal zugeführt, wenn durch die jeweilige Schnittstelleneinrichtung oben erwähnte Adresseninformationen über das Leitungssystem BUS2 oder BUS3 aufgenommen werden. Darüber hinaus dienen die Schnittstelleneinrichtungen (P6, P7) für die Übertragung der oben erwähnten Steuersignale zum Steuern von Lesevorgängen in den Pufferspeichern PS. Über die Schnittstelleneinrichtung P8 nimmt dagegen der Mikroprozessor MP2 eine Einstellung des in FIG 2 dargestellten Koppelfeldes KF vor.

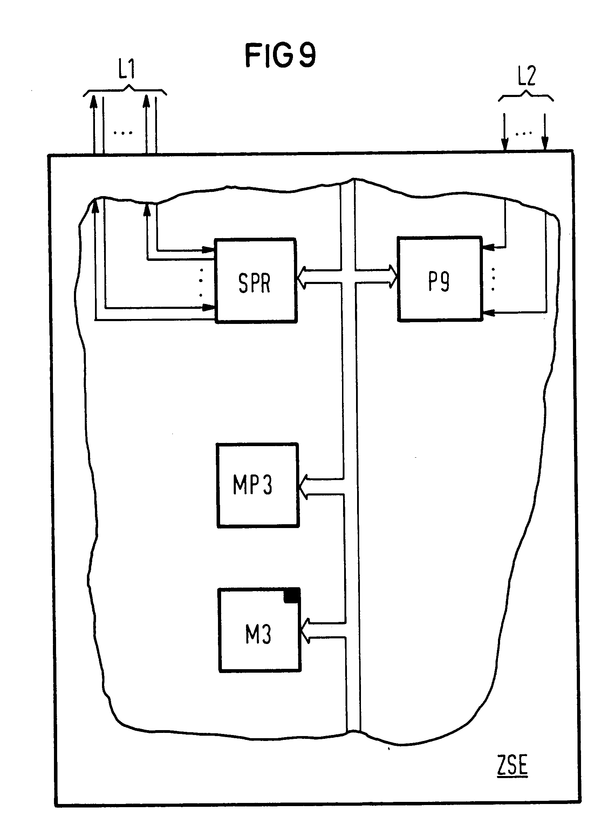

Wie bereits oben erwähnt, kann die in FIG 1 dargestellte zentrale Steuereinrichtung ZSE als Mikroprozessoroanordnung ausgebildet sein. Ein möglicher Aufbau ist in FIG 9 ausschnittweise dargestellt. An das Bussystem eines Mikroprozessors MP3 ist als Arbeits- und Programmspeicher eine Speicheranordnung M3 angeschlossen. Außerdem sind mit diesem Bussystem ein Signalprozessor SPR und eine Schnittstelleneinrichtung P9 verbunden. Durch den Signalprozessor steht die zentrale Steuereinrichtung ZSE über das Leitungssystem L1 mit den in FIG 1 dargestellten Schnittstellenanordnungen SST1 in Verbindung. Der Signalprozessor SPR wickelt selbsttätig die im Zusammenhang mit dem Auftreten von Rufpaketen erforderlichen Prozeduren ab. Er leitet lediglich die in diesen Rufpaketen enthaltenen Zieladressen an den Mikroprozessor MP3 weiter. Anhand einer solchen Zieladresse ermittelt der Mikroprozessor nach Maßgabe einer in der Speicheranordnung M3 geführten Belegungsliste die an der jeweils aufzubauenden Verbindung beteiligten Koppelvielfache der in FIG 1 dargestellten Koppelanordnung und legt dabei für jedes dieser Koppelvielfache den zu benutzenden Ausgang und eine für diesen zu benutzende virtuelle Kanalnummer fest. Nach dieser Festlegung stellt dann der Mikroprozessor MP3 ein Einstell-Paket gemäß einem der oben erwähnten Ausführungsbeispiele zusammen und überträgt dieses über das Leitungssystem L1.

An die Schnittstelleneinrichtung P9 ist das in FIG 1 dargestellte Leitungssystem L2 angeschlossen. Über dieses Leitungssystem erhält die zentrale Steuereinrichtung ZSE, wie bereits oben erwähnt, über die in FIG 1 dargestellte Koppelanordnung übertragene Einstell-Pakete wieder zugeführt.

## Patentansprüche

1. Verfahren zum Einrichten von über Koppelvielfache (K1/1,..., Km/k) einer mehrstufigen Koppelanordnung (1,...,k) verlaufenden virtuellen Verbindungen für die Übertragung von Eingängen der Koppelanordnung zugeführten Nachrichtenpaketen, welche in einem Paketkopf jeweils eine die jeweilige virtuelle Verbindung bezeichnende virtuelle Kanalnummer enthalten, wobei den Eingängen (1,...,8) jedes der Koppelvielfache (K1/1,...,Km/k) jeweils eine Speicheranordnung (USP) zugeordnet ist, in welcher für die über den zugeordneten Eingang verlaufenden virtuellen Verbindungen individuell Informationen gespeichert werden, welche einerseits denjenigen Ausgang (1,...,8) des jeweiligen Koppelvielfaches angeben, über welchen der jeweiligen virtuellen Verbindung zugehörige Nachrichtenpakete weiterzuleiten sind, und welche andererseits eine virtuelle Kanalnummer enthalten, die für eine Weiterleitung von der jeweiligen virtuellen Verbindung zugehörigen Nachrichtenpaketen in diese eingetragen wird,
**dadurch gekennzeichnet**,
daß auf das Auftreten eines die Einrichtung einer virtuellen Verbindung fordernden Rufpaketes, in welchem neben einer diese virtuelle Verbindung bezeichnenden virtuellen Kanalnummer eine Zieladresse enthalten ist, an einem der Eingänge der Koppelanordnung von einer der Koppelanordnung zugeordneten zentralen Steuereinrichtung (ZSE ) zunächst die für die betreffende virtuelle Verbindung in Frage kommenden Koppelvielfache ermittelt und für diese die genannten Informationen festgelegt werden,
daß anschließend von der zentralen Steuereinrichtung (ZSE) her ein die gerade festgelegten Informationen beinhaltendes speziell gekennzeichnetes Einstell-Paket über denjenigen Eingang, an dem zuvor das betreffende Rufpaket aufgetreten ist, der Koppelanordnung zugeführt wird,
daß das Einstell-Paket nach Maßgabe der darin enthaltenen Informationen nacheinander die an der aufzubauenden virtuellen Verbindung beteiligten Koppelvielfache durchläuft und dabei von den Koppelvielfachen jeweils die für diese bestimmten Informationen für eine Speicherung in der jeweils in Frage kommenden Speicheranordnung (USP) entnommen werden,
und daß das betreffende Einstell-Paket nach einem Durchlauf der betreffenden Koppelvielfache der zentralen Steuereinrichtung (ZSE) wieder zugeführt wird.

2. Verfahren nach Anspruch 1,
**dadurch gekennzeichnet**,
daß in dem von der zentralen Steuereinrichtung (ZSE) abgegebenen Einstell-Paket den in die einzurichtende virtuelle Verbindung einbezogenen Koppelvielfachen (K1/1,...,Km/k) zugeordnete Informationsblöcken in der Reihenfolge der zu durchlaufenden Koppelvielfache übertragen werden,
daß der erste Informationsblock den Paketkopf des Einstell-Paketes bildet,
daß in jedem dieser Informationsblöcke eine für die Kennzeichnung eines Einstell-Paketes dienende Steuerinformation, eine die jeweilige virtuelle Verbindung kennzeichnende virtuelle Kanalnummer sowie Adresseninformationen, welche den für eine Weiterleitung zu benutzenden Ausgang des jeweiligen Koppelvielfaches bezeichnen, enthalten sind,
daß in jedem der Koppelvielfache (K1/1,...,Km/k) auf den Empfang eines Einstell-Paketes über einen der Eingänge nach Maßgabe der in dem Paketkopf enthaltenen virtuellen Kanalnummer und Steuerinformation eine der betreffenden virtuellen Kanalnummer zugeordnete Speicherzelle der dem betreffenden Eingang zugehörigen Speicheranordnung (USP) für einen Schreibzyklus angesteuert wird, in welchem die in dem Paketkopf enthaltenen Adresseninformationen und die in dem dem Paketkopf nachfolgenden Informationsblock enthaltene virtuelle Kanalnummer in die gerade angesteuerte Speicherzelle gespeichert werden,
und daß das zuvor empfangene Einstell-Paket unter Weglassen des ersten Informationsblockes bzw. Anfügen des ersten Informationsblockes an das Ende des Einstell-Paketes über den durch die zuvor gespeicherten Adresseninformationen bezeichneten Ausgang weitergeleitet wird.

3. Verfahren nach Anspruch 1,
**dadurch gekennzeichnet**,
daß in dem von der zentralen Steuereinrichtung (ZSE) abgegebenen Einstell-Paket ein Paketkopf, in welchem eine für die Ansteuerung des ersten Koppelvielfaches (z.B. K1/1) zu benutzende virtuelle Kanalnummer und für die Kennzeichnung eines Einstell-Paketes dienende Steuerinformationen enthalten sind, und den in die einzurichtende virtuelle Verbindung einzubeziehenden Koppelvielfachen zugeordnete Informationsblöcke in der Reihenfolge der zu durchlaufenden Koppelvielfache übertragen werden,
daß in jedem der Informationsblöcke den jeweils zu benutzenden Ausgang bezeichnende Adresseninformationen und eine für diesen Ausgang gültige virtuelle Kanalnummer enthalten sind, daß in jedem der Koppelvielfache (K1/1,...,Km/k) auf den Empfang eines Einstell-Paketes über einen der Eingänge nach Maßgabe der im Paketkopf enthaltenen virtuellen Kanalnummer eine Speicherzelle der dem betreffenden Eingang zugehörigen Speicheranordnung (USP) für einen Schreibzyklus angesteuert wird, in welchem die in dem dem Paketkopf nachfolgenden Informationsblock enthaltenen Informationen in die gerade angesteuerte Speicherzelle gespeichert werden, und daß unter Weglassen des bisherigen Paketkopfes und Ersetzen der in dem diesem nachfolgenden Informationsblock enthaltenen Adresseninformationen durch die in dem bisherigen Paketkopf enthaltenen Steuerinformationen das zuvor empfangene Einstell-Paket über den durch die zuvor gespeicherten Adresseninformationen bezeichneten Ausgang weitergeleitet wird.

4. Verfahren nach Anspruch 1,
**dadurch gekennzeichnet**,
daß in dem von der zentralen Steuereinrichtung (ZSE) abgegebenen Einstell-Paket ein Paketkopf, in welchem eine für die Kennzeichnung eines Einstell-Paketes dienende festgelegte virtuelle Kanalnummer enthalten ist, und den in die einzurichtende virtuelle Verbindung einbezogenen Koppelvielfachen (K1/1,...,Km/k) zugeordnete Informationsblöcken in der Reihenfolge der zu durchlaufenden Koppelvielfache übertragen werden,
daß in jedem dieser Informationsblöcke eine die jeweilige virtuelle Verbindung kennzeichnende virtuelle Kanalnummer sowie Adresseninformationen bezüglich des für eine Weiterleitung zu benutzenden Ausganges des jeweiligen Koppelvielfaches enthalten sind,
daß in jedem der Koppelvielfache (K1/1,...,Km/k) auf den Empfang eines Einstell-Paketes über einen der Eingänge nach Maßgabe der in dem dem Paketkopf nachfolgenden Informationsblock enthaltenen virtuellen Kanalnummer eine Speicherzelle der dem betreffenden Eingang zugehörigen Speicheranordnung (USP) für einen Schreibzyklus angesteuert wird, in welchem die in dem betreffenden Informationsblock enthaltenen Adresseninformationen und die in dem diesem Informationsblock nachfolgenden Informationsblock enthaltene virtuelle Kanalnummer in die gerade angesteuerte Speicherzelle gespeichert werden
und daß das zuvor empfangene Einstell-Paket unter Weglassen des bisherigen ersten Informationsblockes bzw. Anfügen des ersten Informationsblockes an das Ende des Einstell-Paketes über den durch die zuvor gespeicherten Adresseninformationen bezeichneten Ausgang weitergeleitet wird.

5. Verfahren nach Anspruch 2,
**dadurch gekennzeichnet**,
daß durch die in den Informationsblöcken eines Einstell-Paketes jeweils enthaltenen Steuerinformationen zusätzlich angezeigt wird, ob in dem jeweiligen Koppelvielfach (K1/1,...Km/k) beim Durchlauf des betreffenden Einstell-Paketes ein Schreibzyklus durchgeführt werden soll oder nicht bzw. ob im Zuge eines Schreibzyklus zusätzlich eine virtuelle Kanalnummer und Adresseninformationen in die in Frage kommende Speicheranordnung eingeschrieben werden soll.

## Claims

1. Method for establishing virtual connections, which pass through switching matrices (K1/1,...,Km/k) of a multi-stage switching system (1,...k) for the transmission of message packets which are fed to inputs of the switching system and each respectively contain in a packet header a virtual channel number designating the respective virtual connection, a memory device (USP) being respectively assigned to the inputs (1,...,8) of each of the switching matrices (K1/1,...,Km/k), in which memory device (USP) information items are individually stored for the virtual connections passing through the assigned input, which information items on the one hand specify the output (1,...,8) of the respective switching matrix via which message packets assigned to the respective virtual connection are to be passed on, and on the other hand contain a virtual channel number which is entered in message packets assigned to the respective virtual connection so that they can be passed on, characterised in that, on arrival of a call packet requesting the establishment of a virtual connection, and containing a destination address in addition to a virtual channel number designating this virtual connection, at one of the inputs of the switching system from a central control device (ZSE) assigned to the switching system, first the switching matrices to be considered for the virtual connection in question are determined and the aforementioned information items are established for the said matrices,
in that a specially designated setup packet containing the information items just established is then fed from the central control device (ZSE), via the input through which the call packet in question previously arrived, to the switching system,
in that the setup packet successively passes through the switching matrices participating in the virtual connection to be established in accordance with the information items contained by the said setup packet and the switching matrices respectively pick up the information items intended for them for storage in the respective memory device (USP) in question,
and in that, once it has passed through the switching matrix in question, the setup packet in question is fed back to the central control device (ZSE).

2. Method according to Claim 1, characterised in that, in the setup packet emitted by the central control device (ZSE), information blocks assigned to the switching matrices (K1/1,...,Km/k) included in the virtual connection to be established are transmitted in the sequence of the switching matrices to be passed through, in that the first information block forms the packet header of the setup packet,
in that each of the said information blocks contains a control information item which is used to designate a setup packet, a virtual channel number which designates the respective virtual connection, and address information items which designate the output of the respective switching matrix which is to be used for passing on,
in that, in each of the switching matrices (K1/1,...,Km/k) on receipt of a setup packet via one of the inputs, in accordance with the virtual channel number and the control information item contained in the packet header, a memory cell, which is assigned to the virtual channel number in question, of the memory device (USP) assigned to the input in question is set for a write cycle in which the address information items contained in the packet header and the virtual channel number contained in the information block following the packet header are stored in the memory cell which has just been set,
and in that the previously received setup packet is passed on via the output designated by the previously stored address information items, with removal of the first information block and/or addition of the first information block to the end of the setup packet.

3. Method according to Claim 1, characterised in that, in the setup packet emitted by the central control device (ZSE), a packet header, which contains a virtual channel number to be used to set the first switching matrix (e.g. K1/1) and contains control information items which are used to identify a setup packet, and information blocks which are assigned to the switching matrices to be included in the virtual connection to be established are transmitted in the sequence of the switching matrices to be passed through,
in that each of the information blocks contains address information items designating the output to be used in each case and contains a virtual channel number which applies to the said output,
in that, in each of the switching matrices (K1/1,...,Km/k), on receipt of a setup packet via one of the inputs, in accordance with the virtual channel number contained in the packet header, a memory cell of the memory device (USP) assigned to the input in question is set for a write cycle in which the information items contained in the information block following the packet header are stored in the memory cell which has just been set,
and in that the previously received setup packet is passed on via the output designated by the previously stored address information items, with removal of the previous packet header and replacement of the address information items contained in the information block following the said packet header by the control information items contained in the previous packet header.

4. Method according to Claim 1, characterised in that, in the setup packet emitted by the central control device (ZSE), a packet header, which contains a virtual channel number which has been established to identify a setup packet, and information blocks which are assigned to the switching matrices (K1/1,...,Km/k) which are included in the virtual connection to be established are transmitted in the sequence of the switching matrices to be passed through,
in that each of these information blocks contains a virtual channel number identifying the respective virtual connection and contains address information items concerning the output of the respective switching matrix to be used for passing on,
in that, in each of the switching matrices (K1/1,...,Km/k), on receipt of a setup packet via one of the inputs in accordance with the virtual channel number contained in the information block following the packet header, a memory cell of the memory device (USP) assigned to the input in question is set for a write cycle in which the address information items contained in the information block in question and the virtual channel number contained in the information block following the said information block are stored in the memory cell which has just been set,
and in that the previously received setup packet is passed on via the output designated by the previously stored address information items, with removal of the previous first information block and/or addition of the first information block to the end of the setup packet.

5. Method according to Claim 2, characterised in that it is indicated in addition, by means of the control information items respectively contained in the information blocks of a setup packet, whether a write cycle is to be performed or not in the respective switching matrix (K1/1,...,Km/k) as the setup packet in question passes through, and/or whether a virtual channel number and address information items are in addition to be written into the memory device in question in the course of a write cycle.

## Revendications

1. Procédé pour l'établissement de liaisons virtuelles passant par des multiples de couplage (K1/1, ..., Km/k) d'un dispositif de couplage (1,...,k) à plusieurs étages, pour la transmission de paquets d'informations, qui sont envoyés à des entrées du dispositif de couplage et qui contiennent, dans une tête de paquet, respectivement un numéro virtuel de canal caractérisant la liaison virtuelle respective, selon lequel aux entrées (1,...,8) de chacun des multiples de couplage (K1/1,...,Km/k) est respectivement associé un dispositif de mémoire (USP) dans lequel sont mémorisées individuellement, pour les liaisons virtuelles passant par l'entrée associée, des informations qui, d'une part, indiquent la sortie (1,...,8) du multiple de couplage respectif, par laquelle des paquets d'informations associés à la liaison virtuelle respective doivent être retransmis, et qui, d'autre part, contiennent un numéro de canal virtuel, qui, pour une retransmission des paquets d'informations associés à la liaison virtuelle respective, est inséré dans ces paquets , caractérisé par le fait
que lors de l'apparition d'un paquet d'appel au niveau de l'une des entrées du dispositif de couplage,qui demande l'établissement d'une liaison virtuelle et qui contient, en plus d'un numéro virtuel de canal désignant cette liaison virtuelle, une adresse de destination, tout d'abord les multiples de couplage, qui interviennent pour la liaison virtuelle concernée, sont déterminés et que lesdites informations sont établies pour ces multiples de couplage, par un dispositif central de commande (ZSE) associé au dispositif de couplage,
qu'ensuite, un paquet de réglage caractérisé de façon spéciale et contenant les informations précisément fixées, est envoyé, à partir du dispositif central de commande (ZSE), et par l'intermédiaire de l'entrée à laquelle le paquet d'appel considéré est apparu auparavant, au dispositif de couplage,
que le paquet de réglage traverse successivement, en fonction des informations qu'il contient, les multiples de couplage participant à la liaison virtuelle devant être établie et que respectivement les informations qui sont destinées aux multiples de couplage sont prélevées de ces multiples pour respectivement être introduites dans le dispositif de mémoire (USP) qui intervient, et
que le paquet de réglage considéré est à nouveau envoyé, après avoir traversé les multiples de couplage considérés, au dispositif central de commande (ZSE).

2. Procédé suivant la revendication 1, caractérisé par le fait que dans le paquet de réglage délivré par le dispositif central de commande (ZSE) sont transmis des blocs d'informations qui sont associés aux multiples de couplage (K1/1,...,Km/k) insérés dans la liaison vituelle devant être établie, et ce selon la séquence des multiples de couplage devant être traversés,
que le premier bloc d'informations forme la tête du paquet de réglage,
que chacun de ces blocs d'informations contient une information de commande, qui est utilisée pour une caractérisation d'un paquet de réglage, un numéro virtuel de canal caractérisant la liaison virtuelle respective, ainsi que des informations d'adresses, qui désignent la sortie, qui doit être utilisée pour une retransmission, du multiple de couplage respectif,
que dans chacun des multiples de couplage (K1/1,...,Km/k), lors de la réception d'un paquet de réglage par l'intermédiaire de l'une des entrées, une cellule de mémoire, associée au numéro virtuel de canal considéré, du dispositif de mémoire (USP) associé à l'entrée considérée, est commandée en fonction du numéro virtuel de canal contenu dans la tête de paquet et d'une information de commande, pendant un cycle d'enregistrement, durant lequel les informations d'adresses contenues dans la tête de paquet et le numéro virtuel de canal contenu dans le bloc d'informations situé en aval de la tête de paquet, sont mémorisées dans la cellule de mémoire précisément commandée, et
que le paquet de réglage reçu antérieurement est retransmis, moyennant la suppression du premier bloc d'informations ou l'adjonction du premier bloc d'informations à l'extrémité du paquet de réglage, par l'intermédiaire de la sortie désignée par les informations d'adresses mémorisées antérieurement.

3. Procédé suivant la revendication 1, caractérisé par le fait que dans le paquet de réglage délivré par le dispositif de commande central (ZSE), une tête de paquet, qui contient un numéro virtuel de canal devant être utilisé pour la commande du premier multiple de couplage (par exemple K1/1) et des informations de commande utilisées pour la caractérisation d'un paquet de réglage, et les blocs d'informations associés aux multiples de couplage devant être introduits dans la liaison virtuelle qui doit être établie, sont transmis dans la suite des multiples de couplage devant être traversés,
que chacun de blocs d'informations contient des informations d'adresses désignant respectivement la sortie devant être utilisée, et un numéro virtuel de canal convenant pour cette sortie, que dans chacun des multiples de couplage (K1/1,...,Km/k), lors de la réception d'un paquet de réglage par l'intermédiaire de l'une des entrées, une cellule de mémoire du dispositif de mémoire (USP) associé à l'entrée considérée, est commandée en fonction du numéro virtuel de canal contenu dans la tête de paquet pendant un cycle d'enregistrement, durant lequel les informations contenues dans le bloc d'informations qui succède à la tête de paquet, sont mémorisées dans la cellule de mémoire précisément commandée, et que moyennant la suppression de la tête de paquet jusqu'alors présente et le remplacement des informations d'adresses contenues dans le bloc d'informations qui succède à cette tête de paquet, par les informations de commande contenues dans la tête de paquet existant antérieurement, le paquet de réglage reçu antérieurement est retransmis par l'intermédiaire de la sortie désignée par les informations d'adresses mémorisées antérieurement.

4. Procédé suivant la revendication 1, caractérisé par le fait que dans le paquet de réglage délivré par le dispositif central de commande (ZSE), une tête de paquet, qui contient un numéro virtuel de canal déterminé, qui sert à la caractérisation d'un paquet de réglage, et des blocs d'informations associés aux multiples de couplage (K1/1,...,Km/k) insérés dans la liaison virtuelle devant être établie, sont transmis dans la suite des multiples de couplage devant être traversés,
que chacun de ces blocs d'informations contient un numéro virtuel de canal, qui caractérise la liaison virtuelle respective, ainsi que des informations d'adresses concernant la sortie, qui doit être utilisée pour une retransmission, du multiple de couplage respectif,
que dans chacun des multiples de couplage (K1/1,...,Km/k), lors de la réception d'un paquet de réglage par l'intermédiaire de l'une des entrées, une cellule de mémoire du dispositif de mémoire (USP) associé à l'entrée considérée est commandée en fonction du numéro virtuel de canal contenu dans le bloc d'informations situé en aval de la tête de paquet pendant un cycle d'enregistrement, durant lequel les informations d'adresses, contenues dans le bloc d'informations considéré, et le numéro virtuel de canal, contenu dans le bloc d'informations qui se situe en aval de ce bloc d'informations, sont mémorisés dans la cellule de mémoire précisément commandée, et
que le paquet de réglage reçu antérieurement est retransmis par l'intermédiaire de la sortie désignée par les informations d'adresses mémorisées antérieurement, moyennant la suppression du premier bloc d'informations présent jusqu'alors ou l'adjonction du premier bloc d'informations à la fin du paquet de réglage.

5. Procédé suivant la revendication 2, caractérisé par le fait que les informations de commande contenues respectivement dans les blocs d'informations d'un paquet de réglage permettent, en outre, d'indiquer si, dans le multiple respectif de couplage (K1/1,...,Km/k), lors du passage du paquet de réglage considéré, un cycle d'enregistrement doit être exécuté ou non ou si, au cours d'un cycle d'enregistrement, un numéro virtuel de canal et des informations d'adresses doivent être en outre enregistrés dans le dispositif de mémoire entrant en jeu.
